# EUROPÄISCHE PATENTSCHRIFT

(11) **EP 0 675 011 B1**
(45) Veröffentlichungstag und Bekanntmachung des Hinweises auf die Patenterteilung: **18.06.1997**
(21) Anmeldenummer: 95103471.9
(22) Anmeldetag: 10.03.1995
(51) Int. Cl.: B60C 11/04, B60C 11/13

(54) **Fahrzeugreifen mit Steinabweiser**
Tyre with stone-ejecting arrangement
Bandage pneumatique avec blocs éjecteurs de pierres

(30) Priorität: 30.03.1994 DE 4410999
(43) Veröffentlichungstag der Anmeldung: 04.10.1995
(73) Patentinhaber: Continental Aktiengesellschaft, 30165 Hannover (DE)
(72) Erfinder: Trabandt, Hagen, D-31319 Sehnde (DE); Ramcke, Uwe, D-29664 Walsrode (DE)

(56) Entgegenhaltungen:
- EP-A- 0 499 933
- DE-A- 3 727 050
- FR-A- 858 220
- FR-A- 1 163 341
- FR-A- 2 470 696
- US-A- 3 727 661

## Beschreibung

Die Erfindung bezieht sich auf einen Fahrzeugreifen, insbesondere Fahrzeugluftreifen, insbesondere zur Verwendung an Nutzfahrzeugen, mit einer profilierten Lauffläche, wobei zur Profilierung Umfangsrillen gehören, wobei in dem Nutengrund mindestens einer der Umfangsrillen ein sich über deren gesamte Länge erstreckender Steinabweiser - das ist ein etwa mittig auf dem Grunde der Umfangsrille(n) befindlicher, radial innen, aber nicht seitlich einstückig mit dem Rest der Lauffläche verbundener Steg - angeordnet ist, wobei der Steinabweiser der Höhe nach in zwei Bereiche gegliedert ist, wobei im oberen Bereich der Steinabweiser durch im wesentlichen axial verlaufende Rillen unterbrochen ist, während er im unteren Bereich ununterbrochen ist.

Insbesondere an Luftreifen für LKW ist das Problem bekannt, daß sich in den Rillen, die der Wasserdrainage aus der Lauffläche dienen, Steine beträchtlichen Gewichtes festsetzen können. Die Walkbewegung beim Einlauf in den Latsch fördert ein Aufnehmen von Steinen und eine allmähliche Weiterbeförderung nach radial innen. Dabei kann sich die Steinwanderung bis in den Grund der Rillen fortsetzen und schließlich kann es zu einer allmählichen Durchdringung des über den Gürtellagen befindlichen Abdeckgummis kommen.

Um einen solchen Schadensverlauf zu vermeiden, sind bereits viele verschiedene Maßnahmen bekannt geworden. Unter diesen scheint die einfachste zu sein, die Rillenflanken stark gegenüber der Radialen zu neigen, sodaß sich die Rillen deutlich nach radial außen hin erweitern. Diese Maßnahme hat aber den Nachteil, daß sich gerade im Zusammenhang mit der großen Profiltiefe von LKW-Reifen, üblicherweise 22 mm, ein beträchtlicher Unterschied in der Rillenbreite über der Radialen ergibt. Dies führt dazu, daß die Rillenbreite im Neuzustand des Reifens unnötig groß, das verbleibende Positiv damit unnötig klein und die Profiltiefenabnahme über der Lebensdauer damit unnötig hoch ist. Die Wirtschaftlichkeit ist aber von größter Bedeutung für den Verkauf in diesem Marktsegment.

Es ist deshalb üblich, die Rillenflanken deutlich steiler zu stellen; die übliche Flankenneigung gegenüber der Radialen liegt zwischen 3° und 6°.

Um dennoch eine Verletzung der Gürtellagen durch eindringende Steine zu vermeiden, ist häufig im Rillengrund eine als Steinabweiser bezeichnete Erhebung angeordnet. Es scheint Konsens zwischen den bedeutenden LKW-Reifenherstellern darüber zu geben, daß Steinabweiser befriedigend funktionieren; Uneinigkeit besteht aber noch über die optimale Gestaltung.

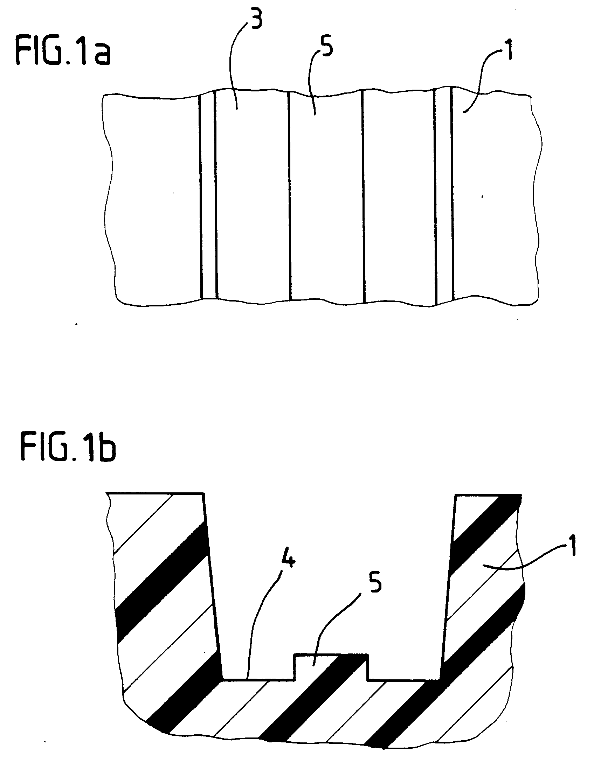

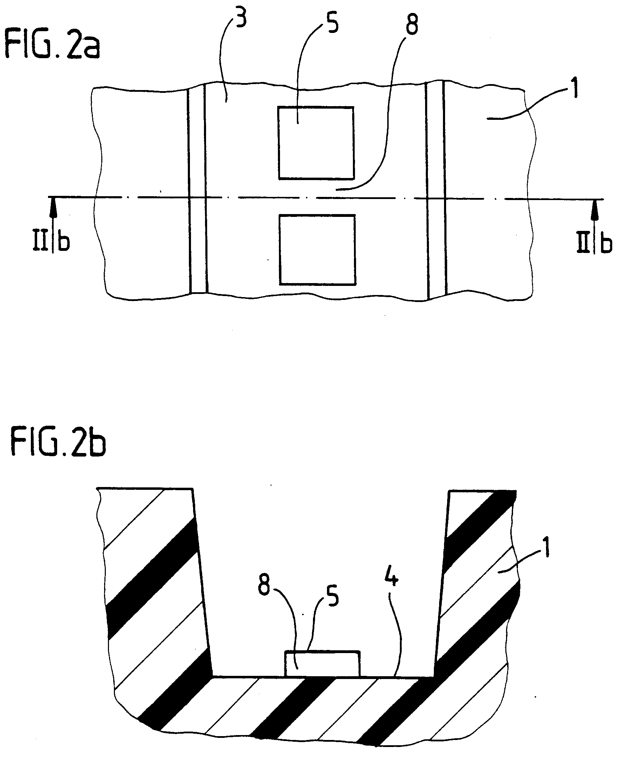

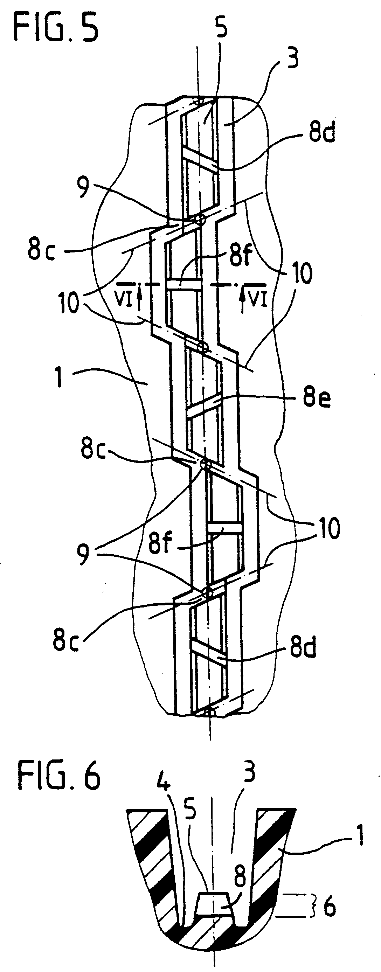

Zwei geläufige Bauformen zeigen die Figurenpaare 1a und 1b und 2a und 2b. Bei der in den Figuren 1 schematisierten Bauform ist der Steinabweiser über dem Umfang ununterbrochen; dem entspricht die DE-A-37 27 050, Figur 5 und FR-PS 1.163.341, Figur 2. Bei der in den Figuren 2 schematisierten Bauform ist der Steinabweiser durch kleine Quernuten unterbrochen; dieser Bauform folgt die DE-A-37 27 050, Figur 7 und FR-A-2 470 696, Figur 1. Die FR-PS 1.163.341 zeigt in Figur 16 die Kombination beider Bauformen; dieser Gestaltung entspricht der Oberbegriff des Anspruches 1.

Die FR-A-2 470 696 lehrt ferner, daß die im wesentlichen quer verlaufenden Nuten, die den Steinabweiser in der Umfangserstreckung unterbrechen, gegenüber der Axialen geneigt sein können und sich diese Neigung von Nute zu Nute ändern kann.

US-PS 2.265.543 zeigt in Fig. 3 (= Fig. 4 aus FR-A-858 220) trapezförmige Steinabweiser. Zwischen je zwei Steinabweisern 12 befindet sich je ein ebenfalls trapezförmiger Positivvorsprung 11, von denen ein jeder radial innen und an einer seiner beiden Seiten mit dem in Bodeneingriff kommenden Positiv verbunden ist. Der Abstand zwischen je zwei in Umfangsrichtung aufeinanderfolgenden Vorsprüngen 11 innerhalb derselben Umfangsrille ist größer als die Umfangserstreckung eines jeden Vorsprunges 11.

US-PS 3,727,661 lehrt eine Profilgrundgestaltung mit stegartigen Erhebungen, die zu beiden axialen Seiten hin an die Nutflanken angebunden sind. Die seitlichen Anbindungen verschlechtern das Verhältnis von steinabweisender Wirkung im Verhältnis zum Baugewicht und Rollwiderstand. Nach der Definition im ersten Absatz dieser Beschreibung sind diese Erhebungen nicht als "Steinabweiser" anzusprechen.

Die EP-A-0 499 933 zeigt eine steinabweisende Nutengrunderhebung mit rippenartigen Anbindungen an die Nutflanken.

In beiden bereits genannten Figuren der hier vorliegenden Anmeldung wie auch den späteren, die die Erfindung darstellen, ist der Fahrzeugreifen als 1, die Rille, vorzugsweise Umfangsrille, die zu schützen ist, als 3 und der im Rillengrund 4 angeordnete Steinabweiser als 5 bezeichnet. Die in den Figuren 2 dargestellten Unterbrechungen des Steinabweisers 5 sind mit 8 bezeichnet.

Die Erfinder haben sich die Aufgabe gestellt, die im Hinblick auf das Gewicht, den Rollwiderstand, die Heftigkeit der steinabweisenden Wirkung und den Penetrations-Widerstand sowie auch im Hinblick auf das Geräusch bestmögliche Gestaltung für die an sich bekannten Steinabweiser anzugeben.

Die erfindungsgemäße Lösung ist dadurch gekennzeichnet, daß zumindest die Mehrheit der den Steinabweiser in seinem oberen Bereich unterbrechenden, im wesentlichen quer verlaufenden Nuten gegenüber der Axialen um einen Winkel zwischen 10° und 40° geneigt sind und, daß der Winkel sich von Nute zu Nute ändert, und daß die Höhe des unteren Bereiches, innerhalb dessen der Steinabweiser von keinen Rillen unterbrochen wird, gemessen vom Grunde der Längsrille aus 5 bis 20 % der maximalen Profiltiefe beträgt.

Gegenüber einem ununterbrochenen Steinabweiser beansprucht der oberbegriffsgemäße weniger Negativvolumen, beeinträchtigt also im weit abgefahrenen Zustande weniger die Wasserdrainage. Die steinabweisende Wirkung ist aber ungeschmälert. Gegenüber einem unterbrochenen Steinabweiser, wobei die unterbrechenden Nuten bis zum Rillengrund herunterreichen, ist das verbleibende Drainagevolumen zwar geringfügig kleiner, aber die mechanische Belastbarkeit, insbesondere die Abrißfestigkeit ist wesentlich erhöht. Es hat sich nämlich gezeigt, daß auch im Grunde eines nicht mit der Fahrbahn in Kontakt tretenden Steinabweisers beträchtliche Spannungen entstehen, die sich bei der bisherigen Ausführung unterbrochener Steinabweiser mit den Spannungen im Rillengrunde überlagern.

Mit der oberbegriffsgemäßen Gestaltung hingegen werden beide Wechselspannungsfelder in der Radialen auseinandergezogen. Die kennzeichnende Bemessung des unteren, ununterbrochenen Bereiches des Steinabweisers führt zur weitestmöglichen Absenkung der resultierenden Maximalspannungen.

Im Zusammenspiel mit der verringerten Biegesteifigkeit des unterbrochenen Steinabweisers ergibt sich analog zu den flankenoffenen Keilriemen sogar eine geringere Belastung als bei einem ununterbrochenen Steinabweiser.

Der erfindungsgemäß wechselnde Winkel der unterbrechenden Nuten zur Axialen verstetigt die Wechsel des beschriebenen mechanischen Wechselspannungsfeldes und steigert so ohne Minderung der Steinabweisung die Abrißbeständigkeit. Ferner unterstützt diese Winkelschwankung die Frequenzstreuung im Abrollgeräusch.

Vorzugsweise wird der Steinabweiser so bemessen, daß die Gesamthöhe (H) des Steinabweisers (5) gemessen vom Grunde (4) der Längsrille (3) aus 15 bis 35 % der maximalen Profiltiefe (T) beträgt.

Es ist eine solche Bemessung vorteilhaft, wo die Höhe des unteren Bereiches, innerhalb dessen der Steinabweiser von keinen Rillen unterbrochen wird, gemessen vom Grunde der Längsrille aus 1,8 mm beträgt und damit als Verschleißanzeiger (tread wear indicator, kurz "TWI") wirkt.

Weiterhin empfiehlt es sich, um einem erfindungsgemäßem Steinabweiser eine hohe Festigkeit bei geringem Volumen zu verleihen, den Steinabweiser im Querschnitt mit einer solchen Flankenneigung auszuführen, daß er sich nach radial außen hin verjüngt, wobei der Flankenwinkel gegenüber der Radialen zwischen 0 und 30° liegt.

In einer Weiterbildung der Reifenausführungen mit schräg zur Axialen verlaufenden, den Steinabweiser erfindungsgemäß nur in seinem oberen Bereich unterbrechenden Nuten mit Umfangsrillen, die in an sich bekannter Weise zick-zack-förmig verlaufen wird vorgeschlagen, daß an jeder Versatzstelle einer solchen Zick-zack-Umfangsrille erfindungsgemäße, den oberen Bereich des Steinabweisers unterbrechende Nuten angeordnet sind, die mit den Versätzen selber in einer Flucht liegen und dadurch an diesen Stellen scharnierachsenähnliche Linien erhöhter Biegeweichheit schaffen. Die so konzentrierte Flexibilität führt zu einem besonders günstigen Auswurfverhalten gegenüber den Steinen, die zufällig eine Position an einer solchen Unterbrechung des Steinabweisers eingenommen haben.

Die Erfindung wird nachfolgend anhand der Figuren 3a bis 6 näher erläutert. Es zeigt:
- Fig. 3a: in der Draufsicht einen Ausschnitt auf einen erfindungsgemäßen Reifen,
- Fig. 3b: den gleichen Reifenbereich wie Fig. 3a im Querschnitt,
- Fig. 4: in Draufsicht auf einen Ausschnitt aus einem Reifen mit Traktionsprofil etwas mehr als eine Periodenlänge einer erfindungsgemäß gestalteten Zick-zack-Umfangsrille und
- Fig. 5: analog Fig. 4 einen Ausschnitt aus einem Reifen für nicht angetriebene Achsen.
- Fig. 6: ausschnittsweise einen Querschnitt durch einen erfindungsgemäßen Reifen im Bereich einer Umfangsrille gemäß Figur 4 oder Figur 5.

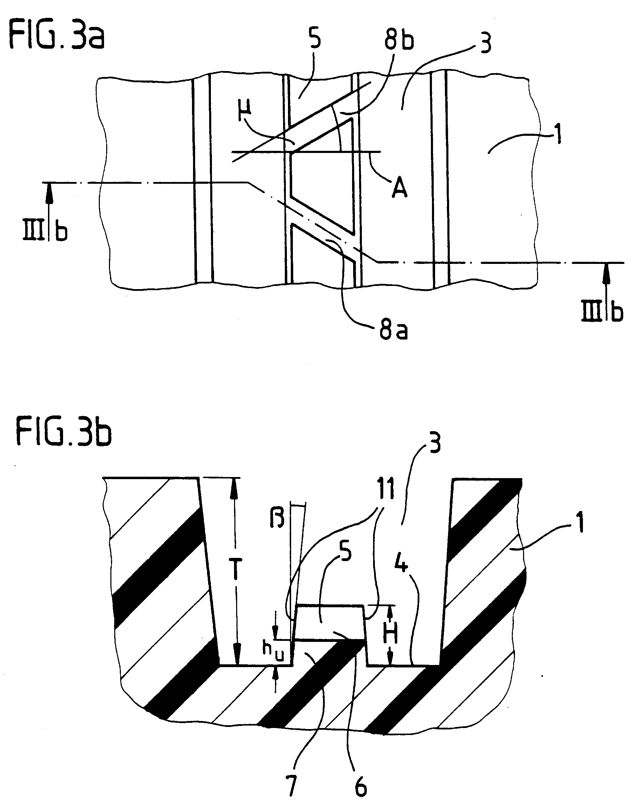

Figur 3a zeigt in der Draufsicht einen Ausschnitt auf einen erfindungsgemäßen Reifen 1 mit einer geraden Umfangsrille 3 und einem erfindungsgemäßen Steinabweiser 5. Die den Steinabweiser 5 in seinem oberen Bereich unterbrechenden Nuten 8a und 8b sind gegenüber der Axialen A schräg gestellt. Der Schrägungswinkel µ beträgt in diesem Ausführungsbeispiel 30°. Der bevorzugten Ausführung nach Anspruch 7 folgend alterniert die Orientierung dieser Schrägstellung nach dem Muster rechts-links-rechts-links und so weiter. In strichpunktierter Linie ist der Schnittverlauf zur Erzeugung der zugehörigen Figur 3b angegeben.

Figur 3b zeigt den gleichen Reifenbereich wie Fig. 3a, jedoch im Querschnitt. Die Umfangsrille 3 des Reifens 1 hat die Profiltiefe T, die hier wie - bei modernen Reifen für schwere Straßen-LKW üblich - 22 mm beträgt. Der Steinabweiser 5 hat vom Rillengrund 4 aus gemessen die Gesamthöhe H, die in diesem Beispiel 7 mm beträgt, also 31,8 % der Rillentiefe T im Neuzustand. Erfindungsgemäß ist der Steinabweiser 5 untergliedert in einen oberen Bereich 6, in dem er (5) unterbrochen ist, und einen unteren Bereich 7, in dem er (5) ununterbrochen ist. Die Höhe hᵤ des unteren Bereiches 7 beträgt hier 3 mm, also 13,6 % der Profilrillentiefe T. Die seitlichen Begrenzungsflächen 11 des Steinabweisers, die auch als Abweiserflanken bezeichnet werden, sind um den Winkel β gegenüber der Radialen geneigt; der Winkel β beträgt in diesem Ausführungsbeispiel 5°.

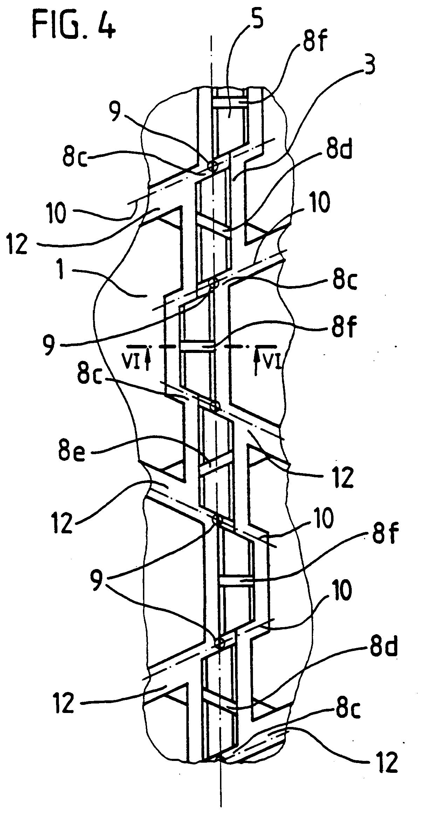

Figur 4 zeigt in Draufsicht auf einen Ausschnitt aus einem Reifen 1 mit Traktionsprofil etwas mehr als eine Periodenlänge einer erfindungsgemäß gestalteten zickzackförmigen Umfangsrille 3. Die Versatzstellen der Umfangsrille 3 sind mit dem Bezugszeichen 9 markiert. An allen Versatzstellen 9 mündet von einer Seite her eine Querrille 12 in die Umfangsrille 3 ein.

Der erfindungsgemäß nur in seinem oberen Bereich durch im wesentlichen quer verlaufende Nuten 8 unterbrochene Steinabweiser 5 folgt dem Rillenverlauf. Zur genaueren Erläuterung der Abfolge der verschiedenen Unterbrechungsnuten 8 sind diese durch einen nachgestellten Buchstaben näher differenziert:

Mit 8c sind all die Unterbrechungsnuten bezeichnet, die sich entsprechend dem Anspruch 8 an jeder Versatzstelle 9 befinden und mit den Versätzen selber in einer Flucht liegen, sodaß sich hierdurch an diesen Stellen 9 scharnierachsenähnliche Linien 10 erhöhter Biegeweichheit ergeben. Die Steigung der scharnierachsenähnlichen Linien 10 und damit auch der Nuten 8c gegenüber der Axialen ist alternierend, alternierend allerdings nicht nach dem einfachen Muster rechts-links-rechts-links und so weiter sondern nach dem Muster rechts-rechts-links-links-rechts-rechts-links-links und so weiter. Zwischen je zwei gleichorientierten Nuten 8c befindet sich je eine entgegengesetzt orientierte Nut 8d bzw. 8e, die nicht mit entsprechenden Versätzen der Umfangsrille 3 fluchten zur weiteren Aufweichung und Massenersparnis. Zwischen je zwei verschieden orientierten Nuten 8c befindet sich eine exakt axial verlaufende Nut 8f.

Alle diese den Steinabweiser 5 unterbrechenden Nuten 8 reichen nicht bis zum Rillengrund herunter sondern durchsetzen erfindungsgemäß nur dessen oberen Bereich.

Figur 5 zeigt analog Figur 4 einen Ausschnitt aus einem Reifen für nicht angetriebene Achsen. Im Gegensatz zur Ausführung in Figur 4 münden hier also keine Querrillen in die Umfangsrille 3. Im übrigen ist die Abfolge der erfindungsgemäß nur den oberen Bereich des Steinabweisers 5 durchsetzenden Nuten 8, also 8d, 8e und 8f die gleiche wie in Figur 4.

Figur 6 zeigt ausschnittsweise einen Querschnitt durch einen erfindungsgemäßen Reifen 1 im Bereich einer Umfangsrille 3. Weil dieser Querschnitt sowohl zu der in Figur 4 als auch zu der in Figur 5 gezeigten Ausführung paßt, ist er zum leichteren Verständnis sowohl der Figur 4 als auch der Figur 5 auf beiden entsprechenden Figurenblättern unten angegeben. Zu erkennen sind relativ steil stehende Rillenflanken, wodurch die Abnahme des Negativvolumens über abnehmender Rillentiefe auf das kleinstmögliche Maß reduziert wird, während die Steinabweiserflanken stärker gegenüber der Radialen geneigt sind. Die den Steinabweiser 5 unterbrechenden Nuten 8 reichen erfindungsgemäß nicht bis auf den Rillengrund 4 herunter sondern durchsetzen nur dessen (5) oberen Bereich 6.

Die Erfindung beansprucht lediglich einen geringfügig erhöhten Aufwand zur Herstellung der benötigten Vulkanisationsformen. In der Serienfertigung von Reifen wird dies mehr als aufgewogen durch die Ersparnis an Kautschuk und dies bei geringfügig gemindertem Rollwiderstand und unvermindert gutem Steinauswurf bzw. Steinwanderungssperre.

Weiterhin ist die Rißgefahr im Rillengrund und die Abrißgefahr der Steinabweiser durch die Erfindung gegenüber den vorbekannten Steinabweisern mit bis in den Rillengrund herunterreichenden Unterbrechungsnuten des Steinabweisers signifikant gesenkt.

## Patentansprüche

1. Fahrzeugreifen (1), insbesondere Fahrzeugluftreifen (1), insbesondere zur Verwendung an Nutzfahrzeugen, mit einer profilierten Lauffläche (2), wobei zur Profilierung Umfangsrillen (3) gehören, wobei in dem Nutengrund (4) mindestens einer der Umfangsrillen (3) ein sich über deren gesamte Länge erstreckender Steinabweiser (5) - das ist ein etwa mittig auf dem Grunde (4) der Umfangsrille(n) (3) befindlicher, radial innen, aber nicht seitlich einstückig mit dem Rest der Lauffläche (2) verbundener Steg - angeordnet ist, wobei der Steinabweiser (5) der Höhe nach in zwei Bereiche gegliedert ist, wobei im oberen Bereich (6) der Steinabweiser (5) durch im wesentlichen axial verlaufende Rillen (8) unterbrochen ist, während er (5) im unteren Bereich (7) ununterbrochen ist,
**dadurch gekennzeichnet,** daß zumindest die Mehrheit der den Steinabweiser (5) in seinem oberen Bereich (6) unterbrechenden, im wesentlichen quer verlaufenden Nuten (8) gegenüber der Axialen (A) um einen Winkel (µ) zwischen 10° und 40° geneigt sind und, daß der Winkel (µ) sich von Nute (8a) zu Nute (8b) ändert, und daß die Höhe (hᵤ) des unteren Bereiches (7), innerhalb dessen der Steinabweiser (5) von keinen Rillen (8) unterbrochen wird, gemessen vom Grunde (4) der Längsrille (3) aus 5 bis 20 % der maximalen Profiltiefe (T) beträgt.

2. Fahrzeugreifen (1) nach Anspruch 1 dadurch gekennzeichnet, daß die Gesamthöhe (H) des Steinabweisers (5) gemessen vom Grunde (4) der Längsrille (3) aus 15 bis 35 % der maximalen Profiltiefe (T) beträgt.

3. Fahrzeugreifen (1) nach einem der vorangehenden Ansprüche dadurch gekennzeichnet, daß die Höhe (hᵤ) des unteren Bereiches (7), innerhalb dessen der Steinabweiser (5) von keinen Rillen (8) unterbrochen wird, gemessen vom Grunde (4) der Längsrille (3) aus 1,8 mm beträgt und damit als Verschleißanzeiger (TWI) wirkt.

4. Fahrzeugreifen (1) nach einem der vorangehenden Ansprüche dadurch gekennzeichnet, daß der Steinabweiser (5) im Querschnitt eine Flankenneigung derart aufweist, daß sich der Abweiser (5) nach radial außen hin verjüngt, wobei der Flankenwinkel (β) gegenüber der Radialen zwischen 0 und 30° liegt.

5. Fahrzeugreifen (1) nach einem der vorangehenden Ansprüche dadurch gekennzeichnet, daß die Umfangsrillen (3) in an sich bekannter Weise zick-zack-förmig verlaufen wobei an jeder Versatzstelle (9) den oberen Bereich (6) des Steinabweisers (5) unterbrechende Nuten (8c) angeordnet sind, die mit den Versätzen selber in einer Flucht liegen und dadurch an diesen Stellen (9) scharnierachsenähnliche Linien (10) erhöhter Biegeweichheit schaffen.

## Claims

1. Vehicle tyre (1), more especially a pneumatic vehicle tyre (1), more especially for use with commercial vehicles, having a profiled tread surface (2), circumferential grooves (3) belonging to the profiling, a stone deflector (5) - that is to say a web which is situated substantially centrally on the base (4) of the circumferential groove(s) (3) and which is integrally connected to the remaining part of the tread surface (2) radially internally, but not laterally - being disposed in the base (4) of at least one of the circumferential grooves (3) and extending over their entire length, the stone deflector (5) being vertically divided into two regions, the stone deflector (5) being interrupted in the upper region (6) by substantially axially extending grooves (8), while it (5) is uninterrupted in the lower region (7), characterised in that at least most of the grooves (8), which interrupt the stone deflector (5) in its upper region (6) and extend substantially transversely, are inclined relative to the axial line (A) at an angle (µ) of between 10° and 40°, in that the angle (µ) changes from groove (8a) to groove (8b), and in that the height (hᵤ) of the lower region (7), within which the stone deflector (5) is interrupted by no grooves (8), is between 5 % and 20 % of the maximum profile depth (T) when measured from the base (4) of the longitudinal groove (3).

2. Vehicle tyre (1) according to claim 1, characterised in that the overall height (H) of the stone deflector (5) is between 15 % and 35 % of the maximum profile depth (T) when measured from the base (4) of the longitudinal groove (3).

3. Vehicle tyre (1) according to one of the preceding claims, characterised in that the height (hᵤ) of the lower region (7), within which the stone deflector (5) is interrupted by no grooves (8), is 1.8 mm when measured from the base (4) of the longitudinal groove (3) and, in consequence, acts as a tread wear indicator (TWI).

4. Vehicle tyre (1) according to one of the preceding claims, characterised in that, when viewed with respect to its diameter, the stone deflector (5) has a flank inclination such that the deflector (5) tapers radially outwardly, the flank angle (β) being between 0° and 30° relative to the radial line.

5. Vehicle tyre (1) according to one of the preceding claims, characterised in that the circumferential grooves (3) extend in a zigzag manner known per se, grooves (8c) being disposed at each offset location (9) and interrupting the upper region (6) of the stone deflector (5), said grooves being in alignment with the offset arrangements themselves and thereby creating hinge pin-like lines (10) of increased flexibility at these locations (9).

## Revendications

1. Bandage pneumatique de véhicule (1), notamment pneumatique de véhicule automobile (1), destiné notamment à être utilisé sur des véhicules utilitaires, comportant une surface de roulement (2) pourvue d'une sculpture, et dans lequel la sculpture comporte des rainures circonférentielles (3) et dans le fond (4) d'au moins l'une des rainures circonférentielles (3) est disposé un éjecteur de pierres (5), qui s'étend sur toute la longueur des rainures - c'est-à-dire une barrette qui est disposée approximativement en position centrée sur le fond (4) de la ou des rainures circonférentielles (3), et est relié d'un seul tenant au reste de la surface de roulement (2) sur le côté intérieur du point de vue radial, mais pas latéralement - et dans lequel l'éjecteur de pierres (5) est subdivisé en deux parties dans le sens de la hauteur, l'éjecteur de pierres (5) étant interrompu dans la partie supérieure (6) par des gorges (8) qui s'étendent essentiellement axialement alors que dans la partie inférieure (7) il (5) n'est pas interrompu,
caractérisé en ce qu'au moins la multiplicité des gorges (8), qui interrompent l'éjecteur de pierres (8) dans sa partie supérieure (6) et s'étendent essentiellement transversalement, sont inclinées d'un angle (µ) compris entre 10° et 40° par rapport à la direction axiale (A), que l'angle (µ) varie d'une gorge (8a) à une gorge (8b) et que la hauteur (hᵤ), mesurée à partir du fond (4) de la rainure longitudinale (3), de la partie inférieure (7) dans laquelle l'éjecteur de pierres (5) n'est interrompu par aucune gorge (8) est comprise entre 5% et 20% de la profondeur maximale (T) de la structure.

2. Bandage pneumatique (1) selon la revendication 1, caractérisé en ce que la hauteur totale (H) de l'éjecteur de pierres (5) mesurée à partir du fond (4) de la rainure longitudinale (3) est comprise entre 15 et 35% de la profondeur maximale (T) de la sculpture.

3. Bandage pneumatique (1) selon l'une des revendications précédentes, caractérisé en ce que la hauteur (hᵤ), mesurée à partir du fond (4) de la rainure longitudinale (3), de la partie inférieure (7) à l'intérieur de laquelle l'éjecteur de pierres (5) n'est interrompu par aucune gorge (8), est égale à 1,8 mm et par conséquent agit en tant que témoin d'usure (TWI).

4. Bandage pneumatique (1) selon l'une des revendications précédentes, caractérisé en ce que l'éjecteur de pierres (5) possède, en coupe transversale, des flancs ayant une inclinaison telle que l'éjecteur (5) se rétrécit radialement vers l'extérieur, l'angle (β) des flancs par rapport à la direction radiale étant compris entre 0 et 30°.

5. Bandage pneumatique de véhicule (1) selon l'une des revendications précédentes, caractérisé en ce que les rainures circonférentielles (3) s'étendent de façon connue selon une forme en zigzag, et en chaque point de décalage (9) sont disposées des gorges (8c), qui interrompent la partie supérieure (6) de l'éjecteur de pierres (5) et sont alignées avec les décalages eux-mêmes et de ce fait créent, en ces points (9), des lignes (10) présentant une flexibilité accrue, analogues à des charnières.
